# EUROPEAN PATENT SPECIFICATION

(11) **EP 2 955 879 B1**
(45) Date of publication and mention of the grant of the patent: **18.07.2018**
(21) Application number: 14172234.8
(22) Date of filing: 12.06.2014
(51) Int. Cl.: H04L 12/58

(54) **A method and system for providing electronic information to a virtual mailbox based on a geographical address**
Verfahren und System zur Bereitstellung von elektronischen Informationen an eine virtuelle Mailbox auf Grundlage einer geografischen Adresse
Procédé et système fournissant des informations électroniques à une boîte aux lettres virtuelle sur la base d'une adresse géographique

(43) Date of publication of application: 16.12.2015
(73) Proprietor: Geo Communication Group bvba, 9051 Gent (BE)
(72) Inventor: Hoebeek, Koen, 1880 Kapelle-op-den-Bos (BE); Van Boven, Geert, 9070 Heusden (BE)
(74) Representative: BiiP cvba

(56) References cited:
- WO-A1-2012/174650
- WO-A2-02/09353
- TW-A- 200 935 258
- US-A1- 2002 099 606

## Description

### Background of the invention:

Thanks to the widespread availability of e-mail, Facebook, Linkedin, etc. you can connect with friends, family, business partners in a very fast and effective way. Touching base with your uncle in New York is a piece of cake. Using Facebook it takes only a blink of an eye to inform your friends all over the world that you have just enjoyed a delicious pistachio ice cream.

However it is much harder to communicate with your neighbours as most of them will not be included in networks. If you move into a new area and you would like to invite your future neighbours, you need to go outside, walk or bike though the streets and put a note in every single physical mailbox. Companies wanting to announce topics of general interest to the residents, they all suffer the same pain.

If you are only aware of the people's street, neighbourhood, village, you have to put a note in their -from real atoms constructed- mailbox, there is no existing digital alternative.

Hence global brands, retailers, governmental organizations, political parties and small businesses continue to drop huge amounts of unaddressed messages and folders in people's mailboxes to spread news, to make announcements or to promote their business. For example, an advertiser that wishes to target a particular geographic area can relatively easily have information delivered to all mailing addresses in a neighborhood based on street addresses or a postal code for instance. Although an electronic campaign would often save both resources and costs, conducting a geographically targeted campaign using electronic addresses would be difficult without prior knowledge of a complete, accurate and current electronic address for every intended recipient.

In an attempt to provide a solution for the above problem US2007043846 (CANADA POST CORP) comprises an interface operable to receive information that is to be distributed to a geographic locator address; and an electronic content distribution module operatively coupled to the interface and operable to determine an electronic address that is uniquely associated with the geographic locator address, and to make electronic content, which comprises the received information, available through the determined electronic address.

A drawback of this system is that geographic locator has its own electronic mailbox, such that content distributed to a plurality of mailboxes has to be stored in each mailbox required high amounts of storing space in the cloud or elsewhere.

Further, the system requires a secure host system controlling access to the electronic content through the electronic address in accordance with a security policy. The security policy may require at least one stage of user authentication.

Other solutions are disclosed in the following patent documents: WO 02/09353 A2 and US 2002/099606 A1 respectively dealing with the transmission of weather information or advertisements within a specific spatial range.

Considering the above it is an object of the present invention to provide a digital platform to send messages or information to a community with which you only have a geographical connection.

It is an object of the present invention to provide a digital platform wherein addressees just need to enter the digital portal by introduction of their address (street, nr & city), without further authentication.

Another benefit is that distributing content does not require high amounts of storing space in the cloud or elsewhere.

In addition the present invention allows anyone to reach more individuals faster, more ecological, more efficient and at an affordable cost. It enables a sender to deliver messages, invitations, folders for free or much cheaper than before. It provides better control of the messages and has a larger reach. An addressee can select only the desired information, there is no waste and the info can be forwarded easily to others.

### Summary of the invention:

The present invention is directed to a method, a system and a computer-readable medium according to the appended claims.

### Description of the invention:

Further, geographical coordinates should be understood as the values of the latitude and longitude for identifying a physical terrestrial location.

The present invention is directed to a method for providing electronic information to a virtual mailbox based on a geographical address comprising: storing a collection of physical locations each associated with a physical location ID in a database, storing a collection of electronic information data packets in a digital library, each data packet associated with a pointer, running a query for retrieving pointers as a function of the physical location associated with an addressee's physical location ID, creating an addressee interface for accessing the electronic information data packets associated with the retrieved pointers.

Indeed, because the method according to the present invention stores a database comprising physical locations, the addressees are identified and stored without an individual manual registering or log-in. Further, based on such a database and the query, the method enables addressees to retrieve only the electronic data packets that are of interest in their physical location in a very easy and efficient way and at any convenient time.

Further, in case the addressee is changing the physical location he/she will have immediate access to the information of interest based on the new physical location and without having to manually request a change to be applied within the stored database.

By implementing such a method, targeting people having direct contact with a geographical location is done easy and efficient and without relying on manual subscriptions or direct requests and definitely without relying on physical delivery services. Furthermore, addressees have at all times direct and easy access to a complete electronic data packet set for their physical location.

Another advantage is that addressees do not have to rely on the physical delivery of a hard copy or on the physical security of their physical mailbox.

A further advantage of a method according to the present invention is the reduced storing space needed. By assigning a pointer to each electronic data packet, only one main data packets database is needed, the selection being performed through the query based on the physical location.

Preferably, the physical location contains information regarding the physical address data selected from a group comprising: country name, province, city name, postal code, street name, street number, Postal Office box, geographical coordinates: latitude and/or longitude, or a combination thereof.

For a more easy retrieval of all relevant physical locations, the method according to the present invention retrieves a collection of physical locations from a cadastral database either public or private. The method can further retrieve and store physical locations from a series of databases. It is not to be excluded that such a database has the capabilities to store new physical locations, manually added.

In an embodiment according to the present invention the physical locations are associated with physical mailbox addresses or Postal Office Boxes or geographical coordinates such as latitude and longitude of such physical mailbox.

In another embodiment according to the present invention, a sender is able to upload an electronic information data packet and define instructions when the pointer associated with such data packed should be retrieved on the addressee interface, by defining the distribution area. Therefore, when an addressee identifies himself with a physical location within the defined distribution area, the pointer associated with the electronic information data packed will be made visible on the addressees interface. If such a location is not within the identified distribution area, the pointer will not be visible on the addressee interface. Due to the specificities of the query, the addressee will have a complete collection of electronic information data packets that are of interest for his physical location.

The sender of an electronic information data packet defines the distribution area through a method selected from a group comprising: making a selection of physical locations by manually imputing such physical locations, selecting an area on a map, or by selecting a perimeter around a physical location, or by selecting a radius around a physical location, or a combination thereof.

In a further embodiment according to the present invention, the sender defines the distribution area by taking into account demographic statistics such as statistics on average income, or nationality majority, or by statistics generated by the addressee's preferences such as existing or previously defined filters (for example: the type of service, product or shop) or business statistics. By applying such a selection criteria, the sender makes sure that the information data packet reaches a specific target group.

When a sender defines the distribution area, the method queries the database comprising the collection of physical locations and identifies all physical mailbox addresses or geographical physical mailbox coordinates in the defined distribution area.

When an addressee accesses the addressee interface by imputing his/her geographical address, the method applies a query for retrieving pointers as a function of the sender's instruction associated with stored data packets, by verifying the location of the addressee against the sender's instructions.

In a further embodiment according to the present invention, an addressee is able to define an area for which he/she would want to have electronic information data packets. Therefore, in case such a person is commuting on a regular basis between two physical locations, he/she will have access to the needed information every time the addressee interface is accessed.

In a further embodiment according to the present invention an addressee is able to upload an electronic data packet.

For an easier retrieve of information, the method according to the present invention classifies the electronic information data packets. In a further embodiment, the method classifies the electronic information data packets relative to content, such classifications including: shopping, leisure, restaurants, events, or file extension, or size, or time stamp (time availability), or a combination thereof.

The addressee is further able to define filters on his/her addressee interface in order to have only information of interest the next time he accesses such interface. It is to be understood that the addresses is able to modify said filters at any time. By defining such filters, when the addressee accesses his/her addressee interface, the query retrieves pointers as a function of the addressee's preferences and is further storing addressee preferences relating to the classifications. The addressee is further able to define filters on specific locations of interest.

For accessing the addressee interface, said addressee inputs his physical mailbox address, or its geographical physical mailbox coordinates, or the addressee selects his physical mailbox on a map. By performing such a step, the physical location of a physical mailbox is being connected to a virtual space wherein pointers take place of actual paper.

In a further embodiment according to the present invention, if said addressee creates filters on his/her interface, the method asks the addressee to input additional credentials, such credentials being selected from a group comprising: an existing e-mail account (such as: Gmail, Yahoo mail, etc.) or an existing account (such as: Facebook, Linkedln, Twitter, etc.) or a method of authenticating the place of residence, such as: by sending a code or a password through conventional paper mail, such a code or a word being used as authentication upon the following access of the interface. The same credentials are required if the addressee uploads an electronic data packet.

In another embodiment according to the present invention, the physical location ID of an addressee is generated by interpolating the latitude coordinates and/or the longitude coordinates and/or the physical location address such as: the country and/or the province and/or the city name and/or the street name and/or the street number and/or the building identifier and/or Postal Office Box. The result of said interpolating is a unique character vector which is further stored within the database.

In a further embodiment, characters are associated with numbers such that the name of the city will have a numerical code associated and/or the name of street will have a numerical code associated. In such a case, the result of said interpolating is a number string in the format of integer or big integer.

Further, when a person accesses his/her addressee interface, the method according to the present invention will run a plurality of queries, from macro to micro query: first query to retrieve pointers intersecting with the addressee's physical location; from the pointers resulting from the first query, retrieving the pointers intersecting with the addressee's preferences by a second query, etc.

In another embodiment according to the present invention the addressee can react on the content of an electronic information data packet or request further electronic or physical information (coupon, paper brochures, etc.) on an electronic information data packet. The sender of the electronic information data packet can include such a possibility through the defined instructions.

The present invention is further directed to a system for providing electronic information to a virtual mailbox based on a geographical address comprising: a database for storing a collection of physical locations each associated with a physical location ID, a digital library for storing a collection of electronic information data packets, each data packet associated with a pointer, a processing unit for running a query for retrieving pointers as a function of the physical location associated with an addressee's physical location ID, means for creating an addressee interface for accessing the electronic information data packets associated with the retrieved pointers.

Further, said system comprises means for receiving physical locations from a cadastral database. Such cadastral database is a public or a private database, or a combination thereof. The information retrieved from said cadastral database comprises physical location information of physical mailboxes such as physical mailbox addresses or geographical physical mailbox coordinates.

The system according to the present invention enables a sender to upload an electronic information data packet within the digital library. Further said processing unit comprises filters for defining the distribution area based on the sender's instructions. Based on such instructions, the pointer associated with an electronic information data packet reaches the geographical locations included in said distribution area. Further, said processing unit is adapted for defining distribution area by making a selection of physical locations, or by selecting an area on a map, or by selecting a perimeter around a physical location.

In a further embodiment according to the present invention, the processing unit of said system allows the sender to define filters for defining the distribution area by demographic statistics such as statistics on average income, or nationality majority, or by statistics generated by the addressee's preferences such as existing or previously defined filters (for example: the type of service, product or shop) or business statistics. By applying such a selection criteria, the sender makes sure that the information data packet reaches a specific target group.

Accordingly, the processing unit is adapted for running the query retrieving pointers as a function of the sender's instruction associated with stored data packets.

For an easier retrieve of information, the digital library comprises means for classifying the electronic information data packets. In a further embodiment, the method classifies the electronic information data packets relative to content, such classifications including: shopping, leisure, restaurants, events, or file extension, or size, or time stamp (time availability), or a combination thereof.

For facilitating ease of retrieval of most relevant data, the database enables storing addressee preferences relating to the classifications.

In a further embodiment according to the present invention, the system comprises a portal enabling an addressee to access the addressee interface by input of his physical mailbox address, or its geographical physical mailbox coordinates, or by selecting his physical mailbox on a map.

In a further embodiment according to the present invention, when such addressee wants to upload an electronic information data packet or when said addressee defines filters on the addressee interface, the system requires input of his/her credentials. Such credentials are selected from a group comprising: an existing e-mail account (such as: Gmail, Yahoo mail, etc.) or an existing account (such as: Facebook, Linkedln, Twitter, etc.) or a method of authenticating the place of residence, such as: by sending a code or a password through conventional paper mail, such a code or a word being used as authentication upon the following access of the interface.

In a further embodiment, the system according to the present invention comprises means for enabling an addressee to react on the content of an electronic information data packet or request further electronic or physical information (coupon, paper brochure, etc.) on an electronic information data packet. The sender of the electronic information data packet can include such a possibility through the defined instructions.

The present invention is further directed to a computer-readable medium containing: a database for storing a collection of physical locations each associated with a physical location ID, a digital library for storing a collection of electronic information data packets, each data packet associated with a pointer, a query for retrieving pointers as a function of the physical location associated with an addressee's physical location ID, means for creating an addressee interface for accessing the electronic information data packets associated with the retrieved pointers.

### EXAMPLE 1:

The present invention optimizes various interactions between a virtual mailbox and a physical mailbox as described below.

In the context of this example, the virtual mailbox is to be understood as the web based addressee interface based on the physical location of a physical mailbox.

In order to view the content of this addressee interface a personal and/or collective address is required. This can be a simple 2-click registration on a web-page identifying the addressee. Such addressee interface address might exist for a few seconds up to infinity. The legal user of the personal and/or collective address is referred to as "addressee".

An addressee interface is to be understood as a virtual mailbox for which "personal and/or collective addressee rights" exist, like a home post box, personal delivery point, shared delivery point or whatever other physical deliveries point. Such addressee rights might exist for a few seconds up to infinity. The legal owner of the addressee rights is referred to as "address owner". The ownership of the addressee interface might belong to the address owner or might belong to a third party that has granted the legal addressee rights of the physical deliveries point to the address owner.

The addressee and the address owner can be one and the same or can be different. If they are different they should act collective. Together they are referred to as "address managers".

All optimized interactions require an upfront singular and/or repeated address manager's approval of the registration of the link between the virtual mailbox and the geographical location of the physical mailbox.

The approval as mentioned above is to be understood as the process between the moment the address managers decide to legally identify them and the actual registration in whatever appropriate infrastructure.

The registration will exist for specific transactions and for a period as defined by the address managers during the registration process. The registration can be cancelled by the address owner or by the addressee or by a third party with legal rights to intervene in this matter.

The present invention provides digital platform is constructed to upload and distribute messages as well as other information to a community with which the addressee or address managers only have geographical connection.

This opens the possibility for a digital geographical communication with an audience of which the sender only knows that the geographical location of the target addressees.

The connection by portal registration will allow the addressee able to check their addressee interface and to drop messages to the people as a digital alternative to a note in their real mailbox, but to a broader audience - e.g. to all addresses in their street, village, or a defined circle around their physical location. The type of messages can be just notes, invitations, as well as news or commercial.

This innovative digital service responds to a need of individuals on occasions where they want to reach other people in the neighbourhood. For global brands, retailers and government the use of this service can result into large savings on communication costs.

The service will allow users to choose for virtual marketing folders instead of physical folders from brands. This choice will avoid physical delivery at physical mailbox. This is guided by the service thru mobile/portable notification of the delivery boy.

As said above, by introduction of their address (street, nr and city) on the portal, users will be able to check and read the content of their addressee interface. A more detailed registration will allow them to distribute messages, invitations, news, etc. to other people in their neighbourhood (or further away) as a digital alternative to a note in the physical mailbox.

The present invention can also be integrated into other internet services that are more commonly used and can provide an overview of the virtual mailbox content at regular intervals to the social network of choice (like Facebook, Twitter,...), to a personal email address or he can opt to use the present invention for mobile devices to consult his addressee interface.

The back-end is driven by an SQL database of all geographical addresses linked to a virtual mailbox. It is equipped with all user interactions, reporting and metrics tools, payment transactions and an API to connect other 3rd party services. The front-end can be accessed by a webbrowser or a mobile app for iOS, Android and Windows RT.

### EXAMPLE OF BUSINESS -MODEL

The basic model of the service is 'freemium'. All messages for non-commercial use within a fixed time-frame and to a limited number of users may be free of charge. This means uploading and distributing information may be free to use for most senders and small non-profit organizations.

There may a charge for all commercial messages based on a payment system with credits. It consists of a limited drop cost for delivery to the addressee interfaces and a pay-per view cost based on real view data.

Potential business opportunities:
- revenue tick when folder is consulted in addressee interface.
- revenue tick when physical delivery is avoided by the notification of the delivery boy
- mining of virtual folder reading by address owner and forwarding this info
- use of mining info for physical delivery (samples, ...)
- bundling of virtual folders
- option of address owner to ask for physical delivery
- option for address owner to get virtual mailbox notification when certain "commercial actions" are in the folder
- option for publishers to distribute to address owners in geographical community

### EXAMPLE OF ADDING A QUERY:

A sender of query according to the present invention accesses a web page and identifies himself through his physical address corresponding to his personal identification. Upon accessing the option for providing a query, the system requests a further check through an existing log-in information or through a physical letter accompanied by a code that is sent to that particular physical address.

Once the check is performed, the system recognizes the personal identification as allowed to provide a query.

The sender defines a name for the query and, in case of an announcement, the sender is able to add a text message in a designated space. If there are documents to be attached to the query, the system according to the present invention allows the sender to attach such document no matter their format.

In a further step, the sender is asked about the time duration that will be associated with such a query, the sender being able to select either an end date through manual input of the date in an indicated format or a drop-down type of calendar, or by selecting a time frame like for example a month, two months, half a year or so forth, or a start date and an end date though a drop-down type of calendar.

Depending on the content of the query, the sender is able to select the category under which it will be stored by the system.

The sender of the query will further define the geographical area associated with such a query by choosing a parameter selected from the group comprising: a street name, or a postal code, or a city, or a country or a combination thereof. Another possibility of selecting the geographical area associated with the query is directly delimiting on a map provided by the system by using tools like: drawing a line or a circle or a non-defined shape on said map. The sender can further instruct the system to consider the addresses retrieved from the database within the selected geographical area, or the sender can further define a radius around the defined geographical area. The system will then consider all the addresses retrieved from the database within the radius defined and the ones within the selected geographical area as able to see the query.

As a result, when a person accesses the webpage and inputs such address, the system will check if such an address is within the identified geographical area. In case the check is positive, the system makes the query visible for him/her. If the check is negative, the query is not visible for the person.

### EXAMPLE OF CREDIT CALCULATION:

After a sender of an electronic information data packet adds a query though the method identified above, the system counts the number of addresses included in the defined geographical area and at the same time makes them visible on a map.

Based on the number of identified addresses, the system according to the present invention determines the number of credits the sender will have to have on his identification page. In case the sender has no credits on his identification page, the system will require the total amount of credits to be added and locked for that query throughout the selected time duration. In case the sender has on his identification page an amount of credits, the system will subtract from the available number the amount approximated for the query and lock them and in case the amount is not sufficient, will ask the user to add the rest on his identification page.

In a further step, the system may be able to approximate the number of views for such a query by using a statistic function applied on previous queries from the same category, preferably from the same area, but it should be understood that such statistic functions can be applied in different geographical areas as well.

Based on such approximation, the system asks the sender to lock the amount of credits corresponding to the approximation.

Once a person identifying himself/herself with a physical address within the selected geographical area views the query, the system increments a counter and subtracts a credit. At the end of the time interval associated with the query, the system creates an overview and updates the identification page of the sender.

It is to be understood that the counter starts from 0 for each new query added.

In another embodiment according to the present invention, the counter can be a dedicated counter for each sender, including information on all queries added by said sender. In such a case the system according to the present invention creates an overview of the credits over a determined period of time considering the complete set of queries or each individual query, or over a specific geographic area like for example: over a country, a province, a city, a neighborhood or a street.

Preferably, the sender is able to select the type of counter and analysis to be performed on his/her identification page.

## Claims

1. A method for providing electronic information to a virtual mailbox based on a geographical address comprising:
a. storing a collection of physical locations each associated with a physical location ID in a database,
b. storing a collection of electronic information data packets in a digital library, each data packet associated with a pointer,
c. running a query for retrieving pointers as a function of the physical location associated with an addressee's physical location ID,
wherein each stored data packet comprises an electronic information data packet uploaded by a sender and the sender's instructions defining the distribution area, in that pointers are retrieved also as a function of the sender's instruction associated with stored data packets, and in that the method comprises the step of creating an addressee interface for accessing the electronic information data packets associated with the retrieved pointers, **characterized in that** the distribution area is defined by making a selection of physical locations wherein the physical locations are physical mailbox addresses or geographical physical mailbox coordinates.

2. A method according to claim 1, wherein said query retrieves pointers as a function of the addressee's preferences and/or said addressee interface stores addressee preferences relating to electronic information data packets classification.

3. A method according to any of the previous claims, wherein an addressee accesses the addressee interface by input of his physical mailbox address, or its geographical physical mailbox coordinates, or by selecting his physical mailbox on a map.

4. A method according to any of the previous claims, wherein the addressee reacts on the content of an electronic information data packet or requests further electronic or physical information regarding an electronic information data packet from the sender of said electronic information data packet.

5. A system for providing electronic information to a virtual mailbox based on a geographical address comprising:
a. A database for storing a collection of physical locations each associated with a physical location ID
b. A digital library for storing a collection of electronic information data packets, each data packet associated with a pointer,
c. A processing unit for running a query for retrieving pointers as a function of the physical location associated with an addressee's physical location ID
wherein the library enables a sender to upload such electronic information data packet and the sender's instructions defining a distribution area, wherein the query retrieves pointers also as a function of the sender's instruction associated with stored data packets, and wherein the system further comprises means for creating an addressee interface for accessing the electronic information data packets associated with the retrieved pointers,
**characterized in that** the distribution area is defined by making a selection of physical locations wherein the physical locations are physical mailbox addresses or geographical physical mailbox coordinates.

6. A system according to claim 5, wherein said database comprises means for retrieving a collection of physical locations from a cadastral database.

7. A system according to claims 5 or 6, wherein the processing unit comprises filters for defining the distribution area based on the sender's instructions.

8. A system according to claims 5 to 7, wherein said processing unit is adapted for defining a distribution area by making a selection of physical locations, or by selecting an area on a map, or by selecting a perimeter around a physical location.

9. A system according to claims 5 to 8, wherein said processing unit comprises filters for defining the distribution area by demographic statistics, or by statistics generated by the addressee's preferences.

10. A system according to claims 5 to 9, wherein the system further comprises a portal enabling an addressee to access the addressee interface by input of his physical mailbox address, or its geographical physical mailbox coordinates, or by selecting his physical mailbox on a map.

11. A computer-readable medium containing:
a. A database for storing a collection of physical locations each associated with a physical location ID
b. A digital library for storing a collection of electronic information data packets, each data packet associated with a pointer,
c. A query for retrieving pointers as a function of the physical location associated with an addressee's physical location ID
wherein the library enables a sender to upload such electronic information data packet and the sender's instructions defining a distribution area, wherein the query retrieves pointers also as a function of the sender's instruction associated with stored data packets, and wherein the computer-readable medium further comprises means for creating an addressee interface for accessing the electronic information data packets associated with the retrieved pointers,
**characterized in that** the distribution area is defined by making a selection of physical locations wherein the physical locations are physical mailbox addresses or geographical physical mailbox coordinates.

## Patentansprüche

1. Verfahren zur Bereitstellung von elektronischer Information an eine virtuelle Mailbox auf Grundlage einer geografischen Adresse, umfassend:
a. Speicherung einer Sammlung physischer Orte, die jeweils einer physischen Standort-ID in einer Datenbank zugeordnet sind,
b. Speicherung einer Sammlung von elektronischen Informationsdatenpaketen in einer digitalen Bibliothek, wobei jedes Datenpaket einem Zeiger zugeordnet ist,
c. Ausführen einer Abfrage zum Abrufen von Zeigern als eine Funktion des physischen Standorts, der der physischen Standort-ID eines Empfängers zugeordnet ist,
wobei jedes gespeicherte Datenpaket ein elektronisches Informationsdatenpaket umfasst, das von einem Sender hochgeladen wurde, und die Anweisungen des Senders den Verteilungsbereich definieren, indem Zeiger auch als eine Funktion der Anweisung des Senders abgerufen werden, die gespeicherten Datenpaketen zugeordnet ist, und dass das Verfahren den Schritt des Erstellens einer Empfängerschnittstelle zum Zugreifen auf die den abgerufenen Zeigern zugeordneten elektronischen Informationsdatenpakete umfasst, **dadurch gekennzeichnet, dass** das Verteilungsgebiet definiert wird, indem eine Auswahl von physischen Orten getroffen wird, wobei die physischen Orte physische Mailboxadressen oder geografische physische Mailboxkoordinaten sind.

2. Verfahren nach Anspruch 1, bei dem die Abfrage Zeiger als eine Funktion der Präferenzen des Empfängers abruft und/oder die Empfängerschnittstelle Empfängerpräferenzen speichert, die sich auf die Klassifizierung von elektronischen Informationsdatenpaketen beziehen.

3. Verfahren nach einem der vorstehenden Ansprüche, wobei ein Empfänger auf die Empfängerschnittstelle durch Eingabe seiner physischen Mailboxadresse oder seiner geografischen physischen Mailboxkoordinaten oder durch Auswählen seiner physischen Mailbox auf einer Karte zugreift.

4. Verfahren nach einem der vorstehenden Ansprüche, wobei der Empfänger auf den Inhalt eines elektronischen Informationsdatenpakets reagiert oder weitere elektronischen oder physischen Informationen bezüglich eines elektronischen Informationsdatenpakets vom Absender des elektronischen Informationsdatenpakets anfordert.

5. System zur Bereitstellung elektronischer Information an eine virtuelle Mailbox auf Grundlage einer geografischen Adresse, umfassend:
a. eine Datenbank zur Speicherung einer Sammlung von physischen Standorten, die jeweils einer physischen Standort-ID zugeordnet sind,
b. eine digitale Bibliothek zur Speicherung einer Sammlung von elektronischen Informationsdatenpaketen, wobei jedes Datenpaket einem Zeiger zugeordnet ist,
c. eine Verarbeitungseinheit zum Ausführen einer Abfrage zum Abrufen von Zeigern als eine Funktion des physischen Standorts, der der physischen Standort-ID eines Empfängers zugeordnet ist,
wobei die Bibliothek es einem Sender ermöglicht, ein solches elektronisches Informationsdatenpaket und die Anweisungen des Senders, die ein Verbreitungsgebiet definieren, hochzuladen, wobei die Abfrage Zeiger auch als eine Funktion der Anweisung des Senders abruft, die gespeicherten Datenpaketen zugeordnet ist, und wobei das System weiter Mittel zur Erzeugung einer Empfängerschnittstelle zum Zugreifen auf die den abgerufenen Zeigern zugeordneten elektronischen Informationsdatenpakete umfasst,
**dadurch gekennzeichnet, dass** das Verteilungsgebiet definiert wird, indem eine Auswahl von physischen Orten getroffen wird, wobei die physischen Orte physische Mailboxadressen oder geografische physische Mailboxkoordinaten sind.

6. System nach Anspruch 5, wobei die Datenbank Mittel zum Abrufen einer Sammlung von physischen Orten aus einer Katasterdatenbank umfasst.

7. System nach Anspruch 5 oder 6, wobei die Verarbeitungseinheit Filter zur Definition des Verteilungsgebiets auf Grundlage der Anweisungen des Senders umfasst.

8. System nach den Ansprüchen 5 bis 7, wobei die Verarbeitungseinheit zur Definition eines Verteilungsgebiets durch Treffen einer Auswahl von physischen Orten oder durch Auswählen eines Gebiets auf einer Karte oder durch Auswählen eines Umfangs um einen physischen Ort herum angepasst ist.

9. System nach den Ansprüchen 5 bis 8, wobei die Verarbeitungseinheit Filter zur Definition des Verteilungsgebiets durch demografische Statistiken oder durch Statistiken, die durch die Präferenzen des Empfängers erzeugt werden, umfasst.

10. System nach den Ansprüchen 5 bis 9, wobei das System weiter ein Portal umfasst, das es einem Empfänger ermöglicht, durch Eingabe seiner physischen Mailboxadresse oder seiner geografischen physischen Mailboxkoordinaten oder durch Auswählen seiner physischen Mailbox auf einer Karte auf die Empfängerschnittstelle zuzugreifen.

11. Computerlesbares Medium beinhaltend:
a. eine Datenbank zur Speicherung einer Sammlung von physischen Standorten, die jeweils einer physischen Standort-ID zugeordnet sind,
b. eine digitale Bibliothek zur Speicherung einer Sammlung von elektronischen Informationsdatenpaketen, wobei jedes Datenpaket einem Zeiger zugeordnet ist,
c. eine Abfrage zum Abrufen von Zeigern als eine Funktion des physischen Orts, der der physischen Standort-ID eines Empfängers zugeordnet ist
wobei die Bibliothek es einem Sender ermöglicht, ein solches elektronisches Informationsdatenpaket und die Anweisungen des Senders, die ein Verbreitungsgebiet definieren, hochzuladen, wobei die Abfrage Zeiger auch als eine Funktion der Anweisung des Senders abruft, die gespeicherten Datenpaketen zugeordnet ist, und wobei das computerlesbare Medium weiter Mittel zur Erzeugung einer Empfängerschnittstelle zum Zugreifen auf die elektronischen Informationsdatenpakete, die den abgerufenen Zeigern zugeordnet sind, umfasst,
**dadurch gekennzeichnet, dass** das Verteilungsgebiet definiert wird, indem eine Auswahl von physischen Orten getroffen wird, wobei die physischen Orte physische Mailboxadressen oder geografische physische Mailboxkoordinaten sind.

## Revendications

1. Procédé de fourniture d'informations électroniques à une boîte à lettre virtuelle sur la base d'une adresse géographique comprenant :
a. le stockage d'une collection d'emplacements physiques associés chacun à un ID d'emplacement physique dans une base de données,
b. le stockage d'une collection de paquets de données d'informations électroniques dans une bibliothèque numérique, chaque paquet de données étant associé à un pointeur,
c. l'exécution d'une interrogation pour récupérer des pointeurs en fonction de l'emplacement physique associé à un ID d'emplacement physique du destinataire,
dans lequel chaque paquet de données stocké comprend un paquet de données d'informations électroniques téléchargé par un expéditeur et les instructions de l'expéditeur définissant la zone de distribution, en ce que des pointeurs sont récupérés également en fonction de l'instruction de l'expéditeur associé à des paquets de données stockés, et en ce que le procédé comprend l'étape de création d'une interface de destinataire pour accéder aux paquets de données d'informations électroniques associés aux pointeurs récupérés, **caractérisé en ce que** la zone de distribution est définie en effectuant une sélection d'emplacements physiques, dans lequel les emplacements physiques sont des adresses de boîte aux lettres physique ou des coordonnées géographiques de boîte aux lettres physique.

2. Procédé selon la revendication 1, dans lequel ladite interrogation récupère des pointeurs en fonction des préférences du destinataire et/ou ladite interface de destinataire stocke des préférences de destinataire relative à une classification de paquets de données d'informations électroniques.

3. Procédé selon l'une quelconque des revendications précédentes, dans lequel un destinataire accède à l'interface de destinataire par la saisie de son adresse de boîte aux lettres physique ou de ses coordonnées géographiques de boîte aux lettres physique, ou par la sélection de sa boîte aux lettres physiques sur une carte.

4. Procédé selon l'une quelconque des revendications précédentes, dans lequel le destinataire réagit au contenu d'un paquet de données d'informations électroniques ou demande d'autres informations électroniques ou physiques concernant un paquet de données d'informations électroniques provenant de l'expéditeur dudit paquet de données d'informations électroniques.

5. Système de fourniture d'informations électroniques à une boîte à lettre virtuelle sur la base d'une adresse géographique comprenant :
a. une base de données pour stocker une collection d'emplacements physiques associés chacun à un ID d'emplacement physique
b. une bibliothèque numérique pour stocker une collection de paquets de données d'informations électroniques, chaque paquet de données étant associé à un pointeur,
c. une unité de traitement pour exécuter une interrogation pour récupérer des pointeurs en fonction de l'emplacement physique associé à un ID d'emplacement physique du destinataire,
dans lequel la bibliothèque permet à un expéditeur de télécharger un tel paquet de données d'informations électroniques et les instructions de l'expéditeur définissant une zone de distribution, dans lequel l'interrogation récupère des pointeurs également en fonction de l'instruction de l'expéditeur associée à des paquets de données stockés, et dans lequel le système comprend en outre des moyens pour créer une interface de destinataire pour accéder aux paquets de données d'informations électroniques associés aux pointeurs récupérés,
**caractérisé en ce que** la zone de distribution est définie en effectuant une sélection d'emplacements physiques, dans lequel les emplacements physiques sont des adresses de boîte aux lettres physique ou des coordonnées géographiques de boîte aux lettres physique.

6. Système selon la revendication 5, dans lequel ladite base de données comprend des moyens pour récupérer une collection d'emplacements physiques à partir d'une base de données cadastrale.

7. Système selon la revendication 5 ou 6, dans lequel l'unité de traitement comprend des filtres pour définir la zone de distribution sur la base des instructions de l'expéditeur.

8. Système selon les revendications 5 à 7, dans lequel ladite unité de traitement est adaptée pour définir une zone de distribution en effectuant une sélection d'emplacements physiques ou en sélectionnant une zone sur une carte ou en sélectionnant un périmètre autour d'un emplacement physique.

9. Système selon les revendications 5 à 8, dans lequel ladite unité de traitement comprend des filtres pour définir la zone de distribution par des statistiques démographiques ou par des statistiques générées par des préférences du destinataire.

10. Système selon les revendications 5 à 9, dans lequel le système comprend en outre un portail permettant à un destinataire d'accéder à l'interface de destinataire par la saisie de son adresse de boîte aux lettres physique ou de ses coordonnées géographiques de boîte aux lettres physique, ou par la sélection de sa boîte aux lettres physiques sur une carte.

11. Support lisible par ordinateur contenant :
a. une base de données pour stocker une collection d'emplacements physiques associés chacun à un ID d'emplacement physique
b. une bibliothèque numérique pour stocker une collection de paquets de données d'informations électroniques, chaque paquet de données étant associé à un pointeur,
c. une interrogation pour récupérer des pointeurs en fonction de l'emplacement physique associé à un ID d'emplacement physique du destinataire
dans lequel la bibliothèque permet à un expéditeur de télécharger un tel paquet de données d'informations électroniques et les instructions de l'expéditeur définissant une zone de distribution, dans lequel l'interrogation récupère des pointeurs également en fonction de l'instruction de l'expéditeur associé à des paquets de données stockés, et dans lequel le support lisible par ordinateur comprend en outre des moyens pour créer une interface de destinataire pour accéder aux paquets de données d'informations électroniques associés aux pointeurs récupérés,
**caractérisé en ce que** la zone de distribution est définie en effectuant une sélection d'emplacements physiques, dans lequel les emplacements physiques sont des adresses de boîte aux lettres physique ou des coordonnées géographiques de boîte aux lettres physique.
